# EUROPÄISCHE PATENTSCHRIFT

(11) **EP 1 247 606 B1**
(45) Veröffentlichungstag und Bekanntmachung des Hinweises auf die Patenterteilung: **06.10.2004**
(21) Anmeldenummer: 02003884.0
(22) Anmeldetag: 21.02.2002
(51) Int. Cl.: B23D 47/04, B27B 5/065

(54) **Sägeanlage**
Sawing system
Installation à scier

(30) Priorität: 23.02.2001 DE 10109007
(43) Veröffentlichungstag der Anmeldung: 09.10.2002
(73) Patentinhaber: Löffler Maschinenbau GmbH, 91799 Langenaltheim (DE)
(72) Erfinder: Löffler, Dieter, 91788 Pappenheim (DE)
(74) Vertreter: Blaumeier, Jörg - Patentanwalt

(56) Entgegenhaltungen:
- EP-A- 0 004 926
- EP-A- 0 830 922
- DE-U- 6 606 703

## Beschreibung

Die Erfindung betrifft eine Sägeanlage mit wenigstens einem Werkstückträger für ein vorzugsweise plattenförmiges Werkstück und wenigstens einer Säge zum Anbringen von unter einem Winkel zueinander stehenden Sägeschnitten, wobei die Sägeanlage ein Mittel zum Separieren eines abgesägten Werkstückabschnitts aufweist.

Solche Sägeanlagen eignen sich für die Bearbeitung der verschiedensten Materialien wie Stein, Beton, Holz, Kunststoff, Aluminium oder Stahl. Block- oder plattenförmige Steinblöcke lassen sich besonders gut auf diese Weise zersägen. Dazu werden diamantbesetzte Kreissägeblätter verwendet. Es sind auch Anlagen gebräuchlich, die zusätzlich zum Sägevorgang Schleif- und/oder Bohrarbeiten durchführen können.

Ein derartiges Werkstück, beispielsweise eine Steinplatte, wird zumeist nach einem bestimmten Schnittmuster zersägt, um daraus unterschiedlich große und unterschiedlich geformte Plattenstücke herzustellen. Dabei kann der Fall auftreten, dass eine Schnittlinie innerhalb der Platte endet, z. B. wenn zwei rechteckige, nebeneinander liegende Plattenabschnitte an eine quer dazu liegende Platte angrenzen. In diesem Fall muss zunächst der durchgehende Schnitt durchgeführt werden, bevor der quer dazu und ansonsten in der Platte endende zweite Schnitt ausgeführt werden kann. Andernfalls käme es zu einer durch die Kreisform des Sägeblatts bedingten Beschädigung des angrenzenden Plattenteils. Die Reihenfolge der einzelnen Sägeschnitte ist daher nicht beliebig und muss für jeden Schnittplan definiert werden.

Die Breite des Sägespalts entspricht in etwa der Dicke des Sägeblatts und liegt im Bereich von einigen Millimetern. Dieser relativ geringe Abstand zwischen den abgesägten Werkstückabschnitten reicht jedoch nicht aus, um unmittelbar danach einen quer dazu liegenden Schnitt auszuführen. Zuvor muss der Abstand zwischen den zersägten Werkstückabschnitten vergrößert werden, was zumeist manuell durchgeführt wird. Diese Tätigkeit setzt eine sorgfältige Arbeitsweise des Bedieners der Sägeanlage voraus, um versehentliche Beschädigungen des Werkstücks zu vermeiden. Nachteilig ist auch, dass der an sich automatisch ablaufende Sägevorgang regelmäßig unterbrochen werden muss.

Eine gattungsgemäße Sägeanlage ist aus EP 0 004 926 bekannt. Um zu verrneiden, dass nach Ausführung eines Horizontalschnitts ein nachfolgend anzubringender Querschnitt zu einer Beschädigung eines anschließenden Plattenabschnitts führt, wird dort der Sägespalt dadurch vergrößert, dass das obere, abgeschnittene Teil über Spannpratzen und eine Verschiebeeinrichtung angehoben wird, so dass der horizontale Sägespalt größer wird und der Vertikalschnitt angebracht werden kann.

Eine gattungsgemäße Sägeanlage ist femer aus DE 66 06 703 U bekannt. Dort ist eine Aufteilformatsäge mit einem Auflagetisch beschrieben, wobei an diesem Tisch die zu zersägende Platte tragende und einzeln verschiebbare Längsteile vorgesehen sind. Nach Anbringen eines Längsschnitts werden die abgeschnittenen Plattenteile voneinander zur Vergrößerung des Längssägespalts durch gruppenweises Verschieben der Längsteile verschoben, wozu eine geeignete Verschiebevorrichtung vorgesehen ist.

Der Erfindung liegt daher das Problem zugrunde, die genannten Nachteile zu vermeiden und das Anbringen von Sägeschnitten an einem Werkstück zu vereinfachen.

Zur Lösung dieses Problems ist bei einer Sägeanlage der eingangs genannten Art erfindungsgemäß vorgesehen, dass das Mittel wenigstens ein in den Sägespalt zur Vergrößerung des Abstands einfahrbares Schiebeelement umfasst.

Die Abschnitte werden vereinzelt, das heißt der Abstand zwischen ihnen wird vergrößert. Dazu genügt es zumeist, einen der Werkstückabschnitte abstandsvergrößernd zu bewegen, während der andere Abschnitt liegen bleiben kann. In Abhängigkeit von dem Schnittplan können selbstverständlich auch mehrere Werkstückabschnitte gleichzeitig abgesägt und separiert werden.

Erfindungsgemäß weist das Mittel zum Separieren wenigstens ein in den Sägespalt zur Vergrößerung des Abstands einfahrbares Schiebeelement auf. Das Schiebeelement ist zweckmäßig plattenförmig ausgebildet, wobei seine Dicke etwas geringer als die Breite des Sägespalts ist, um ein ungehindertes Eingreifen in den Sägespalt zu ermöglichen. Diese Art der Bewegung des oder der abgesägten Werkstücks kann z. B. bei zu sägenden Steinplatten oder Holzplatten zum Einsatz kommen. In Abhängigkeit von den Eigenschaften des Werkstücks kommen aber auch andere Arten des Separierens in Frage. Bei leichten Werkstücken kann das Separieren z. B. durch Vakuumsauger erfolgen, die an dem Werkstück angreifen. Bei einer Stahlplatte kann das Separieren durch einen oder mehrere Elektromagnete bewerkstelligt werden.

Das Separieren kann besonders leicht durchgeführt werden, wenn das Mittel zum Separieren durch Verschieben ausgebildet ist. Vorzugsweise wird ein Werkstückabschnitt dabei senkrecht zur Schnittlinie verschoben, so dass der Sägespalt parallel verbreitert wird. Der Begriff "Verschieben" umfasst dabei sowohl ein Verschieben durch Drücken als auch durch Ziehen des Werkstückabschnitts.

Es hat sich als besonders günstig erwiesen, wenn das Schiebeelement im Bereich seines Endabschnitts keilförmig ausgebildet ist. Dadurch wird das Einfahren in den Sägespalt weiter vereinfacht, ohne dass die Stabilität des Schiebeelements beeinträchtigt wird.

Bei einem plattenförmigen, flach liegenden Werkstück, das durch einen senkrechten Schnitt zerteilt worden ist, lässt sich das Schiebeelement durch eine Absenkbewegung in den Sägespalt einfahren. Anschließend wird das Schiebeelement derart senkrecht zur ersten Bewegungsrichtung bewegt, dass es den abgesägten Werkstückabschnitt zur Vergrößerung des Sägespalts verschiebt. Nach der Verschiebung kann das Schiebeelement wieder vertikal vom Werkstück weg in seine Ruhelage bewegt werden.

Es ist besonders zweckmäßig, wenn die erfindungsgemäße Sägeanlage mehrere nebeneinander angeordnete Schiebeelemente umfasst, die in Abhängigkeit der Länge bzw. Lage des Sägespalts einzeln ansteuerbar und in den Sägespalt einfahrbar sind. Eine erfindungsgemäße Sägeanlage kann eine Vielzahl von Schiebeelementen aufweisen, so dass diese auf der Gesamtlänge des Werkstücks angreifen können. Die einzelnen Schiebeelemente können auch unterschiedlich groß oder unterschiedlich geformt sein.

Der Antrieb eines Schiebeelements kann mechanisch, pneumatisch, elektrisch oder hydraulisch erfolgen. Besonders gut geeignet sind Pneumatikzylinder, die eine Kolbenstange zur Befestigung eines Schiebeelements aufweisen.

Eine Ausführungsform der erfindungsgemäßen Sägeanlage sieht vor, dass die Säge als Brückensäge ausgebildet ist. Die Säge, bzw. der Sägekopf mit dem Sägeblatt ist dabei auf einem brückenartigen Querträger angeordnet und kann sich entlang dieser Brücke bewegen. Beiderseits der Brücke befinden sich Längsträger, auf denen die Brücke geführt wird. Die Bewegungsrichtung der Brückensäge ist dabei senkrecht zur Bewegungsrichtung des Querträgers, so dass der Sägekopf in zwei Achsen steuerbar ist. Es hat sich als besonders günstig herausgestellt, dass das bzw. die Schiebeelemente ebenfalls an einer Brücke angeordnet sind, bei der es sich vorzugsweise um die Brücke handelt, an der der Sägekopf befestigt ist. Die Bewegung und die Funktionen der Schiebeelemente und des Sägekopfes sind jedoch vollkommen unabhängig voneinander, so dass keine gegenseitigen Beeinflussungen auftreten. Sowohl die Schiebeelemente als auch der Sägekopf können bei Nichtbenutzung in eine Ruhelage verfahren werden, so dass das jeweils andere Bauteil benutzt werden kann.

In einer Weiterbildung der Erfindung kann vorgesehen sein, dass die Sägeanlage mehrere Sägeköpfe aufweist, die an der Brücke oder an separaten Brücken, die ggf. auch separat zu bewegen sind, angeordnet sind. Bevorzugt werden zwei Sägeköpfe verwendet. Natürlich können in diesem Fall die Schiebeelemente oder dergleichen an der zweiten Brücke angeordnet sein, um zwei unabhängig voneinander arbeitende Säge- und Separationssysteme zu realisieren. Mit dieser Vorrichtung lassen sich parallele Schnitte zeitsparend anfertigen.

Um schräge Schnitte vornehmen zu können, kann das Werkstück zusammen mit dem Werkstückträger auf einem Drehtisch senkrecht zur Werkstückebene verdreht werden. Desgleichen kann das Sägeblatt um eine zur Werkstückebene senkrecht stehende Achse verdrehbar sein. Diese Verdrehbarkeit kann durch ein Kegelradgetriebe im Sägekopf erzielt werden. Damit kann der Sägekopf und damit das Sägeblatt um einen bestimmten Winkel verdreht werden, um beispielsweise diagonale Schnitte in einer Rechteckplatte anzubringen. Der Sägekopf muss dazu gleichzeitig in der ersten Bewegungsrichtung entlang der Brücke und in der zweiten Bewegungsrichtung senkrecht dazu bewegt werden.

Es ist günstig, wenn die erfindungsgemäße Sägeanlage eine Steuerungs- und/oder Regelungseinrichtung zur Steuerung und/oder Regelung der Bewegung des Sägekopfes und/oder der Brücke aufweist. Auch die Drehung des Sägeblatts kann von der Steuerungs- und/oder Regelungseinrichtung kontrolliert werden.

Gleiches gilt für die Drehung des Drehtisches und die Bewegung des bzw. der Schiebeelemente.

Nach einem in Bezug auf die Brücke und die Längsträger schrägen Schnitt können die abgesägten Werkstücke nicht unmittelbar separiert werden, da der Sägespalt unter einem Winkel zu den Schiebeelementen liegt. Daher weist die erfindungsgemäße Sägeanlage mit besonderem Vorteil einen Werkstückträger für das Werkstück auf, der auf einem Drehtisch positionierbar ist. Dieser Drehtisch ist im Wesentlichen kreisförmig ausgebildet und um seine zentrale Achse drehbar. Die Verdrehbarkeit kann konstruktiv beispielsweise über einen großen Zahnkranz realisiert werden, der durch ein mit einem Elektromotor gekoppeltes Ritzel angetrieben wird. Die Bewegung des Drehtisches kann zweckmäßig ebenfalls von der Steuerungs- und/oder Regelungseinrichtung gesteuert werden. Nach dem Anbringen eines schrägen Schnitts kann der Drehtisch mit dem Werkstückträger und dem Werkstück gedreht werden, bis die vorher schräge Schnittlinie mit der Brücke und somit auch mit den Schiebeelementen fluchtet. Anschließend können die Schiebeelemente in den Sägespalt eingefahren werden und den abgesägten Werkstückabschnitt zur Vergrößerung des Sägespalts verschieben. Zur Erfassung der Position des Drehtischs sowie der Brücke bzw. der Säge sind eine Vielzahl von Positionssensoren vorgesehen, deren Signale zur Bewegungssteuerung verwendet werden. Eine solche Positionserfassung ist in jedem Fall erforderlich, um hochpräzise Schnitte anzubringen und sehr genau bemessene Werkstücke zu sägen.

Die Bedienung der erfindungsgemäßen Sägeanlage wird weiter vereinfacht, wenn ein Schnittplan in die Steuerungs- und/oder Regelungseinrichtung eingebbar und/oder auswählbar ist. Schnittpläne können gespeichert und später wieder abgerufen werden. Ferner kann ein Mittel zur Optimierung von Schnittplänen in Abhängigkeit der Form und Größe des zu zersägenden Werkstücks vorgesehen sein, das beispielsweise als Computerprogramm ausgebildet sein kann.

Die Effektivität einer erfindungsgemäßen Sägeanlage wird weiter erhöht, wenn ein Transportmittel mit der Steuerungs- und/oder Regelungseinrichtung zusammenwirkt, das zum Zuführen und/oder Abfördern von Werkstücken bzw. Werkstückabschnitten ausgebildet ist. Die Werkstückträger können als Paletten ausgebildet und werden im Umlaufsystem in der Anlage bewegt. Die Transportmittel fördern die Werkstückträger auf den Drehtisch, so dass die Sägeschnitte an dem Werkstück vorgenommen werden können. Nach der Bearbeitung wird der Werkstückträger mit den Werkstücken aus der Sägeanlage ausgefördert.

Es liegt auch im Rahmen der Erfindung, ein Sägeanlagensystem zu bilden, das aus einer Mehrzahl von erfindungsgemäßen Sägeanlagen besteht, die über wenigstens ein Transportmittel zum Zuführen von Werkstücken bzw. Abfördern von gesägten Werkstückabschnitten miteinander verbunden sind.

Die Erfindung wird im Folgenden anhand eines besonders geeigneten Ausführungsbeispiels unter Bezugnahme auf die Figuren näher erläutert. Die Figuren sind schematische Darstellungen und zeigen:
- Fig. 1: eine erfindungsgemäße Sägeanlage in einer Draufsicht,
- Fig. 2: die Sägeanlage aus Fig. 1 in einer Vorderansicht,
- Fig. 3: die Sägeanlage aus Fig. 1 in einer Seitenansicht,
- Fig. 4: ein Ausführungsbeispiel eines Transportmittels,
- Fig. 5: eine vergrößerte Darstellung der Brücke im Bereich der Schiebeelemente,
- Fig. 6: ein plattenförmiges Werkstück mit einem aufgezeichneten Schnittplan, der einen unter einem Winkel liegenden Sägeschnitt vorsieht, und
- Fig. 7: das in Fig. 6 gezeigte Werkstück nach dem Anbringen eines Sägeschnitts und nach dem Separieren des abgesägten Werkstückabschnitts.

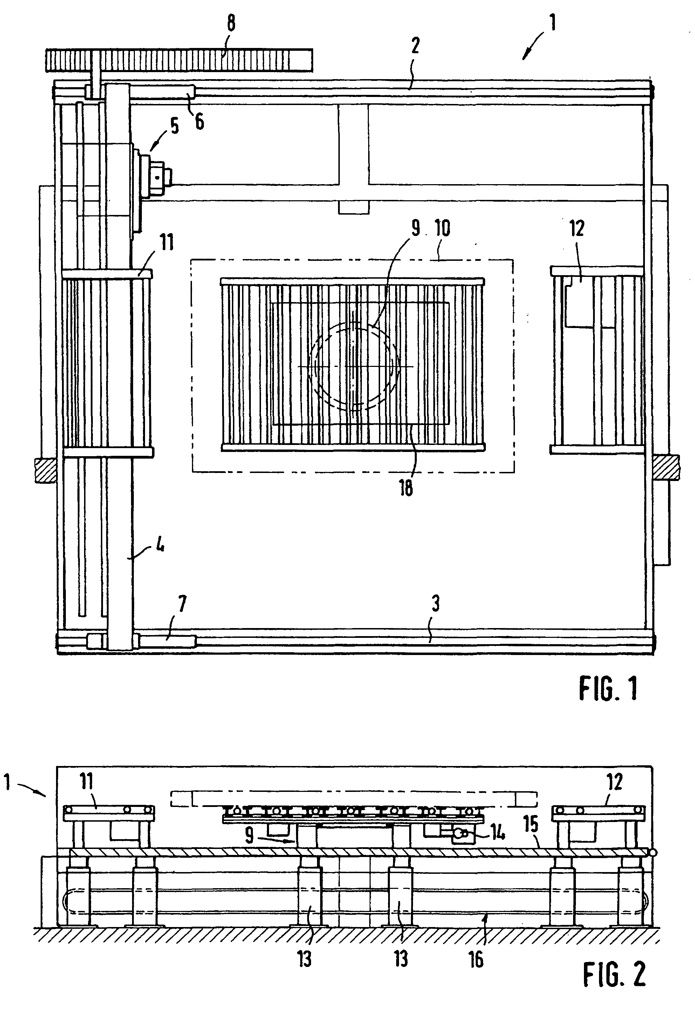

Die in Fig. 1 in einer Draufsicht gezeigte Sägeanlage 1 weist einen in etwa quadratischen Grundriss auf. Sie besteht im Wesentlichen aus zwei parallelen Längsträgern 2, 3, die zur Führung einer quer dazu angeordneten Brücke 4 dienen. An der Brücke 4 ist in dem dargestellten Ausführungsbeispiel ein Sägekopf 5 angeordnet, der entlang der Längsachse der Brücke 4 verschiebbar ist. Die Verschiebung des Sägekopfes 5 entlang der Brücke 4 kann mittels einer Zahnstange oder eines Spindeltriebs erfolgen. Wichtig ist dabei, dass der Sägekopf 5 und damit das Sägeblatt äußerst exakt positioniert werden kann, wobei zur Positionserfassung eine Vielzahl von Positionssensoren vorgesehen sind. Der Sägekopf 5 kann entlang der Brücke 4 in einer ersten Bewegungsrichtung bewegt werden. Die gesamte Brücke 4 kann in einer dazu senkrechten, zweiten Bewegungsrichtung entlang der Längsträger 2, 3 bewegt werden. Dazu weist die Brücke 4 an beiden Enden Ausleger 6, 7 auf, die in entsprechenden Führungsbahnen der Längsträger 2, 3 geführt sind. Der Antrieb der Brücke 4 kann über eine Kette oder eine Zahnstange oder einen anderen Präzisionsantrieb erfolgen.

Die gesamte Sägeanlage 1 wird über einen Schaltschrank 8 bedient und gesteuert. Der Schaltschrank 8 weist Anzeige- und Bedienelemente auf bzw. ist mit derartigen Bauteilen verbunden. Dabei kann es sich beispielsweise um eine Anzeigeeinheit und eine Eingabetastatur handeln.

Im Zentrum der Sägeanlage 1 befindet sich ein Drehtisch 9 mit einem Werkstückträger 10 für ein zu bearbeitendes Werkstück. Der Werkstückträger 10 dient als Auflage oder Unterlage zum Sägen und Separieren der Werkstücke und ist in dem dargestellten Ausführungsbeispiel rechteckig ausgebildet. Er kann beispielsweise aus Holz hergestellt sein und schützt den Drehtisch 9 während des Sägens vor Beschädigungen. Er wird mittels geeigneter Befestigungsmittel auf dem Drehtisch 9 befestigt.

Durch die Verdrehung des Drehtisches oder des Sägeblatts können an einem Werkstück Sägeschnitte in einem beliebigen Winkel angebracht werden. Zur Verdrehung des Sägeblatts müssen sich der Sägekopf 5 und die Brücke 4 gleichzeitig bewegen. Diese kombinierte Vorschubbewegung wird durch eine Steuerungs- und Regelungseinrichtung koordiniert, die in dem Schaltschrank 8 angeordnet ist.

In Fig. 1 sind weiter zwei Zwischenrollenbahnen 11, 12 dargestellt, die mittig zwischen den Längsträgern 2, 3 angeordnet sind. Die Zwischenrollenbahnen 11, 12 dienen zum Zuführen eines Werkstücks 18 mit Hilfe des Werkstückträgers 10 bzw. zum Abfördern von gesägten Werkstückabschnitten. Jede der Zwischenrollenbahnen 11, 12 weist antreibbare Rollen auf, die ein anliegendes Werkstück mit dem Werkstückträger 10 zum Drehtisch 9 hin oder von diesem weg fördern.

Fig. 2 zeigt die Sägeanlage aus Fig. 1 in einer Vorderansicht. Der zentrale Drehtisch 9 ist auf mehreren Stützen 13 gelagert. Zur Bewegung des Drehtisches 9 ist an der Unterseite ein Antrieb 14 angeordnet. Diese Sägeanlage 1 weist ferner eine begehbare Arbeitsbühne 15 auf, die darunter liegende Transportmittel wie einen Kettenförderer 16 abdeckt.

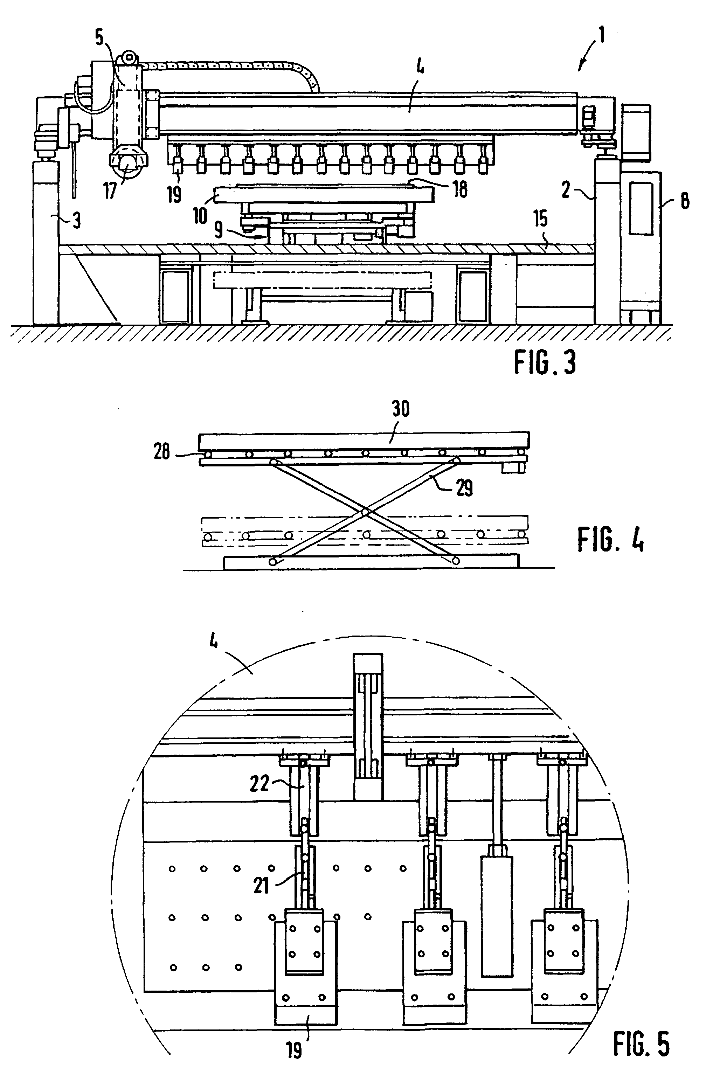

In Fig. 3 ist die Sägeanlage aus Fig. 1 in einer Seitenansicht dargestellt. Besonders gut ist in Fig. 3 der Aufbau der Brücke 4 erkennbar. Die als Querträger ausgebildete Brücke 4 läuft auf den Längsträgern 2, 3, wobei eine Seite als Loslager und die andere Seite als Festlager ausgebildet ist. Die Sägeanlage 1 weist einen Sägekopf 5 mit einem kreisförmigen Sägeblatt 17 auf. Auf dem Werkstückträger 10, der auf dem Drehtisch 9 positioniert ist, liegt das plattenförmige Werkstück 18, bei dem es sich um eine Steinplatte handelt.

Neben dem Sägekopf 5 ist an der Brücke 4 weiterhin eine Vielzahl von Schiebeelementen 19 angeordnet. Dabei handelt es sich um flache Platten, die an ihren freien, nach unten weisenden Enden keilförmig verjüngt sind. Sämtliche Schiebeelemente 19 sind in einer Reihe parallel zur Längsrichtung der Brücke 4 angeordnet. Sie sind jeweils mit einem separaten Antrieb verbunden, bei dem es sich um Pneumatikzylinder handelt. Durch das Aus- oder Einfahren der Kolbenstange des Pneumatikzylinders lässt sich ein Schiebeelement 19 absenken bzw. wieder anheben. Die Schiebeelemente 19 lassen sich bis fast oder direkt auf die Oberfläche des Werkstückträgers 10, der auf dem Drehtisch 9 positioniert ist, absenken.

Wird an dem Werkstück 18 ein parallel zur Brücke 4 verlaufender Sägeschnitt angebracht, so wird anschließend die gesamte Brücke 4 mit den Schiebeelementen 19 soweit parallel zu den Längsträgern 2, 3 verschoben, bis die Schiebeelemente 19 exakt oberhalb des Sägespalts positioniert sind, was über die genannten Positionssensoren, die die Brückenposition erkennen, erfaßt werden kann. Dann werden die Schiebeelemente 19 abgesenkt und in den Sägespalt eingefahren. Ausgehend von dieser Position führt die Brücke 4 eine weitere Parallelverschiebung zur Vergrößerung des Abstands der Werkstückabschnitte durch. Bei der Verschiebung wird wenigstens ein Werkstückabschnitt verschoben, während die anderen Werkstücksabschnitte, also die übrigen Plattenabschnitte an ihrem Ort bleiben. Die Größe der Verschiebung beträgt typischerweise einige Zentimeter. Der Abstand wird so gewählt, dass ein anschließender, zweiter Sägeschnitt, der zum ersten Sägeschnitt unter einem Winkel steht, nicht zu einer Beschädigung von anderen Werkstücksabschnitten führt. Anschließend werden die Schiebeelemente 19 wieder durch den Pneumatikzylinder vom Werkstück weg nach oben bewegt und nehmen ihre Ruhestellung ein. Daraufhin kann der nächste Sägeschnitt durch den Sägekopf 5 erfolgen.

Fig. 5 zeigt eine vergrößerte Darstellung der Brücke 4 im Bereich der Schiebeelemente 19. Jedes der Schiebeelemente 19 ist an einer Kolbenstange 21 eines Pneumatikzylinders 22 befestigt, der wiederum an der Brücke 4 angeordnet ist. Die Schiebeelemente 19 sind mit Abstand zueinander angeordnet und können separat betätigt werden. In Abhängigkeit von der Länge des Schnitts bzw. der Kantenlänge des abgesägten Werkstückabschnitts werden jeweils diejenigen Schiebeelemente 19 abgesenkt, die zur Verschiebung des Werkstückabschnitts benötigt werden. Dadurch kann auch ein zwischen mehreren Werkstückabschnitten liegender Abschnitt separat erfaßt und bewegt werden.

Hat man einen bezüglich der Längsträger 2, 3 oder der Brücke 4 schiefen Sägeschnitt durchgeführt, so kann der abgesägte Werkstückabschnitt nicht ohne weiteres separiert werden. In diesem Fall muss zunächst der Drehtisch 9 gedreht werden, bis der Sägeschnitt parallel zu der Brücke 4 und den Schiebeelementen 19 liegt. Erst dann, wenn die Verbindungslinie der Schiebeelemente 19 mit dem Sägeschnitt fluchtet, können die Schiebeelemente 19 in den Sägespalt einfahren.

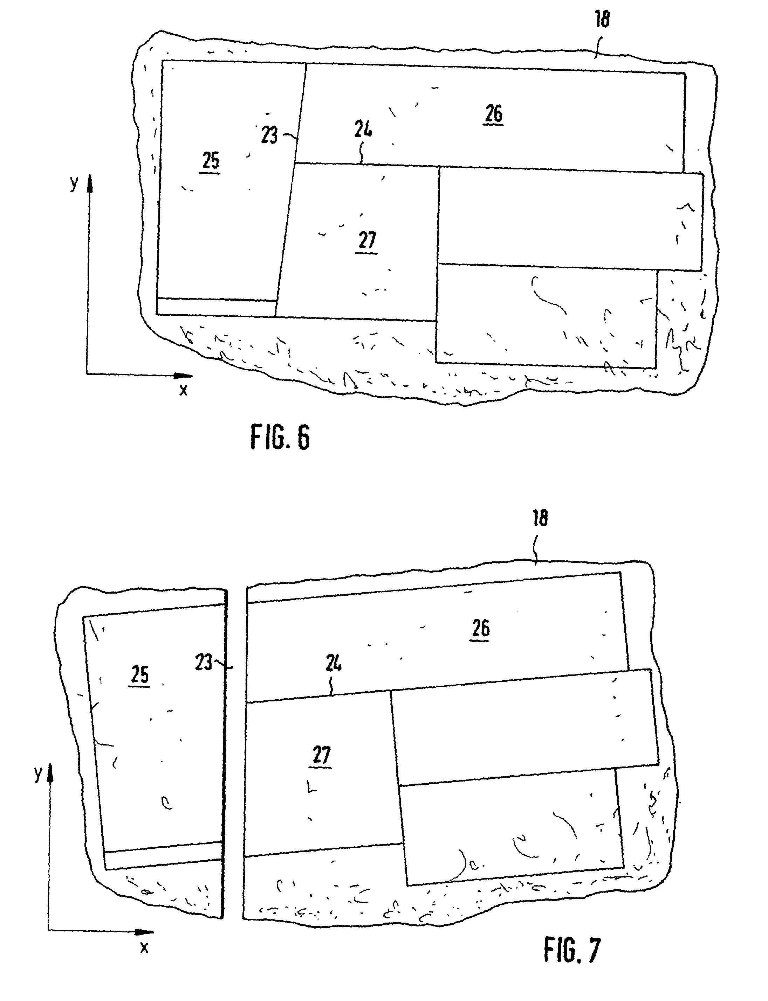

Fig. 6 zeigt ein plattenförmiges Werkstück mit einem aufgezeichneten Schnittplan. Das Werkstück 18 soll gemäß dem Schnittplan in mehrere Werkstückabschnitte zersägt werden. Wie in Fig. 6 zu erkennen ist, müssen die einzelnen Sägeschnitte in einer bestimmten Reihenfolge durchgeführt werden, z. B. muss der Sägeschnitt 23 vor dem Sägeschnitt 24 durchgeführt werden, da es im umgekehrten Fall zu einer Beschädigung des Werkstückabschnitts 25 kommen würde. Nach der Ausführung des Sägeschnitts 23 befindet sich zwischen den Werkstückabschnitten 25 und 26 bzw. 25 und 27 ein Sägespalt, dessen Breite in etwa der Dicke des Sägeblatts 17 entspricht. Um anschließend den Sägeschnitt 24 ausführen zu können, muss der Werkstückabschnitt 25 von den benachbarten Werkstückabschnitten 26 und 27 separiert werden. In dieser Stellung lassen sich die Schiebeelemente 19 noch nicht in den Sägespalt 23 einfahren, da die Brücke 4 parallel zu der in Fig. 6 eingezeichneten y-Achse liegt, die mit dem Sägespalt 23 einen Winkel bildet. Daher wird der Drehtisch 9 mit dem Werkstück 18 im Gegenuhrzeigersinn so weit gedreht, bis der Sägespalt 23 parallel zur Brücke und den Schiebeelementen 19 liegt. In einem zweiten Schnitt wird die Brücke 4 so parallel verschoben, dass die Schiebeelemente 19 exakt oberhalb des Sägespalts 23 positioniert sind. Zur exakten Erfassung der Position des Drehtischs sind ebenfalls eine Vielzahl von nicht näher gezeigten Positionssensoren, die mit der zentralen Steuerung kommunizieren, vorgesehen. Auch hier ist eine hohe Positionierungsgenauigkeit gefordert. Die Schiebeelemente 19 werden dann in den Sägespalt 23 abgesenkt. Anschließend wird die Brücke 4 mit den Schiebeelementen 19 zur Vergrößerung des Sägespalts 23 parallel von den Werkstücksabschnitten 26, 27 weg bewegt.

Fig. 7 zeigt das Werkstück nach dem Anbringen des Sägeschnitts 23 und nach dem Separieren des abgesägten Werkstückabschnitts 25. Die Werkstückabschnitte 26, 27 weisen einen konstanten Abstand zum Werkstückabschnitt 25 auf. Dieser beträgt einige Zentimeter und ist so groß, dass der Sägeschnitt 24 zwischen den Werkstückabschnitten 26 und 27 durchgeführt werden kann, ohne den Werkstückabschnitt 25 zu beschädigen. Durch die Parallelverschiebung entlang der in Fig. 7 eingezeichneten x-Achse wird der Werkstückabschnitt 25 genau positioniert, so dass an ihm Sägeschnitte oder andere Bearbeitungsvorgänge mit großer Präzision vorgenommen werden können.

Mehrere Sägeanlagen 1 können zu einem Sägeanlagensystem zusammengeschlossen werden. Die einzelnen Sägeanlagen 1 sind dabei über wenigstens ein Transportmittel zum Zuführen von Werkstücken bzw. Abfördern von gesägten Werkstückabschnitten miteinander verbunden.

Die als Paletten ausgebildeten Werkstückträger 30 werden im Umlaufsystem in der Anlage bewegt. Wie in Fig. 4 zu erkennen ist, kann ein plattenförmiges Werkstück auf dem Werkstückträger 30 positioniert werden. Anschließend wird es mit der als Scherengestänge 29 ausgebildeten Hubeinrichtung in Einförderhöhe gebracht. Durch das Scherengestänge 29 kann die Höhe des als Rollenbahn 28 ausgebildeten Transportmittels verändert werden. In einer ersten Betriebsstellung entspricht die Höhe des Werkstückträgers 30 der Höhe der in den Fig. 1 und 2 dargestellten Zwischenrollenbahn 12, so dass ein zu beförderndes Werkstück 18, auf dem Werkstückträger 30 liegend von der Rollenbahn 28 zu der Zwischenrollenbahn 12 gefördert werden kann. Von dort wird der Werkstückträger 30 auf den Drehtisch 9 gefördert und der Sägevorgang kann stattfinden. Nach dem Abschluss der Säge- und Separiervorgänge wird der Werkstückträger 30 mit den gesägten Werkstücken vom Drehtisch 9 über die Rollenbahn 11 aus der Sägeanlage 1 ausgefördert und einem weiteren, gleich aufgebauten, als Rollenbahn ausgebildeten Transportmittel zugeführt, das dem in Fig. 4 dargestellten entspricht. Das Scherengestänge 29 wird abgesenkt und befindet sich dann in einer zweiten, unteren Betriebsstellung, die in Fig. 4 gestrichelt eingezeichnet ist. Nach dem Abnehmen der Werkstücke in der unteren Position der Hubeinrichtung wird der Werkstückträger 30 mit den Abfallstücken mittels des in Fig. 2 schematisch dargestellten Kettenförderers 16 unter der Sägeanlage 1 auf die gegenüberliegende Seite zur Rollenbahn 28 zurückgefördert. Dort werden die Abfallstücke durch eine Kippvorrichtung von dem Werkstückträger 30 entfernt und das nächste Werkstück kann auf dem Werkstückträger 30 positioniert werden. In der Anlage 1 werden insgesamt drei Werkstückträger verwendet. Diese Ausführungsform ist besonders bei begrenzten räumlichen Verhältnissen vorteilhaft.

Alternativ zu dem Umlaufsystem mit hubtischartigen Transportmitteln kann das Umlaufsystem auch in einer Ebene mittels Eckumsetzungen ausgeführt sein.

## Patentansprüche

1. Sägeanlage mit wenigstens einem Werkstückträger für ein vorzugsweise plattenförmiges Werkstück und wenigstens einer Säge zum Anbringen von unter einem Winkel zueinander stehenden Sägeschnitten, wobei die Sägeanlage (1) ein Mittel zum Separieren eines abgesägten Werkstückabschnitts (25) aufweist, **dadurch gekennzeichnet, dass** das Mittel wenigstens ein in den Sägespalt (23) zur Vergrößerung des Abstands einfahrbares Schiebeelement (19) umfasst.

2. Sägeanlage nach Anspruch 1, **dadurch gekennzeichnet, dass** das Mittel zum Separieren durch Verschieben ausgebildet ist.

3. Sägeanlage nach Anspruch 1 oder 2, **dadurch gekennzeichnet, dass** das Mittel wenigstens einen Vakuumsauger und/oder wenigstens ein Greiferelement umfasst.

4. Sägeanlage nach einem der vorangehenden Ansprüche, **dadurch gekennzeichnet, dass** das bzw. jedes Schiebeelement (19) plattenförmig ausgebildet ist.

5. Sägeanlage nach einem der vorangehenden Ansprüche, **dadurch gekennzeichnet, dass** das Schiebeelement (19) im Bereich seines Endabschnitts keilförmig ausgebildet ist.

6. Sägeanlage nach einem der vorangehenden Ansprüche, **dadurch gekennzeichnet, dass** das bzw. ein in den Sägespalt (23) eingefahrenes Schiebeelement (19) senkrecht zum Sägespalt (23) verschiebbar ist.

7. Sägeanlage nach einem der vorangehenden Ansprüche, **dadurch gekennzeichnet, dass** das Mittel mehrere nebeneinander angeordnete Schiebeelemente (19) umfasst, die in Abhängigkeit von dem Sägespalt (23) einzeln ansteuerbar und in den Sägespalt (23) einfahrbar sind.

8. Sägeanlage nach einem der vorangehenden Ansprüche, **dadurch gekennzeichnet, dass** das wenigstens eine Schiebeelement (19) mechanisch und/oder pneumatisch und/oder elektrisch und/oder hydraulisch bewegbar ist.

9. Sägeanlage nach einem der vorangehenden Ansprüche, **dadurch gekennzeichnet, dass** die Säge als Brückensäge ausgebildet ist und das wenigstens eine Schiebeelement (19) an einer Brücke (4) angeordnet ist.

10. Sägeanlage nach Anspruch 9, **dadurch gekennzeichnet, dass** mehrere nebeneinander liegende Schiebeelemente (19) entlang der Brücke (4) angeordnet sind.

11. Sägeanlage nach einem der Ansprüche1 bis 8, **dadurch gekennzeichnet, dass** die Säge als Brückensäge ausgebildet ist und wenigstens einen Sägekopf (5) aufweist, wobei der bzw. jeder Sägekopf (5) entlang einer Brücke (4) bewegbar ist und die Brücke (4) in einer dazu senkrechten Richtung bewegbar ist.

12. Sägeanlage nach einem der Ansprüche 9 bis 11, **dadurch gekennzeichnet, dass** ein bzw. der bzw. jeder Sägekopf (5) und wenigstens ein Schiebeelemerit (19) bzw. die Schiebeelemente an der Brücke (4) angeordnet sind.

13. Sägeanlage nach Anspruch 12, **dadurch gekennzeichnet, dass** der bzw. jeder Sägekopf (5) unabhängig von dem Schiebeelement (19) bzw. den Schiebeelementen bewegbar ist.

14. Sägeanlage nach einem der vorangehenden Ansprüche, **dadurch gekennzeichnet, dass** die Säge wenigstens einen Sägekopf (5) mit einem kreisförmigen Sägeblatt (17) aufweist.

15. Sägeanlage nach Anspruch 14, **dadurch gekennzeichnet, dass** das Sägeblatt (17) um eine zur Werkstückebene senkrecht stehende Achse verdrehbar ist.

16. Sägeanlage nach einem der vorangehenden Ansprüche, **dadurch gekennzeichnet, dass** der eine Auflage für das Werkstück (18) bildende Werkstückträger (10, 30) auf einem Drehtisch (9) positionierbar ist.

17. Sägeanlage nach Anspruch 16, **dadurch gekennzeichnet, dass** der Drehtisch (9) im Wesentlichen kreisförmig ausgebildet ist und um seine zentrale Achse drehbar ist.

18. Sägeanlage nach einem der vorangehenden Ansprüche, **dadurch gekennzeichnet, dass** sie eine Steuerungs- und/oder Regelungseinrichtung zur Steuerung und/oder Regelung der Bewegung des wenigstens einen Schiebeelements (19) und/oder gegebenenfalls zur Bewegung der Brücke (4) und/oder gegebenenfalls zur Bewegung des wenigstens einen Sägekopfes (5) und/oder gegebenenfalls zur Drehung des Sägeblatts (17) und/oder gegebenenfalls zur Drehung des Drehtisches (9) aufweist.

19. Sägeanlage nach Anspruch 18, **dadurch gekennzeichnet, dass** in die Steuerungs- und/oder Regelungseinrichtung ein Schnittplan eingebbar und/oder auswählbar ist.

20. Sägeanlage nach Anspruch 19, **dadurch gekennzeichnet, dass** sie ein Mittel zur Optimierung des Schnittplans aufweist.

21. Sägeanlage nach einem der Ansprüche 18 bis 20, **dadurch gekennzeichnet, dass** sie wenigstens ein mit der Steuerungs- und/oder Regelungseinrichtung zusammenwirkendes, vorzugsweise als Rollenbahn (28) ausgebildetes Transportmittel zum Zuführen eines Werkstückträgers (10, 30) mit einem aufliegenden Werkstück (18) und/oder Abfördern von gesägten Werkstückabschnitten (25) aufweist.

22. Sägeanlagensystem, **dadurch gekennzeichnet, dass** es eine Mehrzahl von Sägeanlagen nach einem der Ansprüche 1 bis 21 umfasst, die über wenigstens ein vorzugsweise als Rollenbahn ausgebildetes Transportmittel zum Zuführen von Werkstücken aufweisenden Werkstückträgern bzw. Abfördern von gesägten Werkstückabschnitten miteinander verbunden sind.

## Claims

1. Sawing plant having at least one workpiece support for a preferably flat workpiece and at least one saw for the application of saw cuts arranged at an angle to one another, the sawing plant (1) having a means of separating a sawn-off section (25) of the workpiece, **characterised in that** the means comprises at least one slide element (19) insertable into the saw gap (23) in order to increase the distance.

2. Sawing plant according to claim 1, **characterised in that** the means is formed for separation by displacement.

3. Sawing plant according to claim 1 or 2, **characterised in that** the means comprises at least one vacuum suction device and/or at least one gripping element.

4. Sawing plant according to one of the preceding claims, **characterised in that** the or each slide element (19) is formed flat.

5. Sawing plant according to one of the preceding claims, **characterised in that** the slide element (19) is wedge-shaped at its end section.

6. Sawing plant according to one of the preceding claims, **characterised in that** the or one slide element (19) inserted into the sawing gap (23) is displaceable perpendicular to the sawing gap (23).

7. Sawing plant according to one of the preceding claims, **characterised in that** the means comprises plural adjacent slide elements (19), which may be triggered individually and inserted into the sawing gap (23) individually according to the sawing gap (23).

8. Sawing plant according to one of the preceding claims, **characterised in that** the at least one slide element (19) is movable mechanically and/or pneumatically and/or electrically and/or hydraulically.

9. Sawing plant according to one of the preceding claims, **characterised in that** the saw is formed as a bridge saw and that at least one slide element (19) is disposed on a bridge (4).

10. Sawing plant according to claim 9, **characterised in that** plural adjacent slide elements (19) are disposed along the bridge (4).

11. Sawing plant according to one of claims 1 to 8, **characterised in that** the saw is formed as a bridge saw and has at least one sawing head (5), wherein the or each sawing head (5) is movable along a bridge (4) and the bridge (4) is movable in a direction perpendicular thereto.

12. Sawing plant according to one of claims 9 to 11, **characterised in that** one or the or each sawing head (5) and at least one slide element (19) or the slide elements are disposed on the bridge (4).

13. Sawing plant according to claim 12, **characterised in that** the or each sawing head (5) is movable independently of the slide element (19) or the slide elements.

14. Sawing plant according to one of the preceding claims, **characterised in that** the saw has at least one sawing head (5) with a circular saw blade (17).

15. Sawing plant according to claim 14, **characterised in that** the saw blade (17) is rotatable about an axis perpendicular to the workpiece plane.

16. Sawing plant according to one of the preceding claims, **characterised in that** the workpiece support (10, 30) forming a rest for the workpiece (18) is positionable on a turntable (9).

17. Sawing plant according to claim 16, **characterised in that** the turntable (9) is substantially circular in form and is rotatable about its central axis.

18. Sawing plant according to one of the preceding claims, **characterised in that** it has a control and/or adjustment device for control and/or adjustment of the movement of the at least one slide element (19) and/or optionally for moving the bridge (4) and/or optionally for moving the at least one sawing head (5) and/or optionally for rotating the saw blade (17) and/or optionally for rotating the turntable (9).

19. Sawing plant according to claim 18, **characterised in that** a cutting plan can be input into the control and/or adjustment device and/or is selectable.

20. Sawing plant according to claim 19, **characterised in that** it has a means of optimising the cutting plan.

21. Sawing plant according to claim 18 to 20, **characterised in that** it has at least one conveyor means cooperating with the control and/or adjustment device, preferably in the form of a roller conveyor (28), for supplying a workpiece (18) placed thereon to the workpiece support (10, 30) and/or for conveying away sawn-up workpiece sections (25).

22. Sawing plant system, **characterised in that** it comprises a plurality of saw plants according to one of claims 1 to 21, which are connected together via at least one conveying means preferably in the form of a roller conveyor for supplying workpiece supports having workpieces or for conveying away sawn-up workpiece sections.

## Revendications

1. Installation de sciage comprenant au moins un porte-pièce pour une pièce de préférence en forme de panneau et au moins une scie pour effectuer des coupes disposées en angle les unes par rapport aux autres, l'installation de sciage (1) comportant un moyen de séparation d'un morceau de la pièce (25) sectionné par sciage, **caractérisée en ce que** le moyen comporte au moins un élément coulissant (19) à introduire dans la fente de sciage (23) pour agrandir l'écartement.

2. Installation de sciage selon la revendication 1, **caractérisée en ce que** le moyen de séparation est conçu mobile.

3. Installation de sciage selon la revendication 1 ou 2, **caractérisée en ce que** le moyen comporte au moins un élément d'aspiration et/ou au moins un élément de préhension.

4. Installation de sciage selon l'une quelconque des revendications précédentes, **caractérisée en ce que** le ou chaque élément coulissant (19) est conçu en forme de plaque.

5. Installation de sciage selon l'une quelconque des revendications précédentes, **caractérisée en ce que** l'élément coulissant (19) est conçu avec une forme conique dans la zone de son extrémité.

6. Installation de sciage selon l'une quelconque des revendications précédentes, **caractérisée en ce que** le ou un élément coulissant (19) introduit dans la fente de sciage (23) est mobile perpendiculairement à la fente de sciage (23).

7. Installation de sciage selon l'une quelconque des revendications précédentes, **caractérisée en ce que** le moyen comporte plusieurs éléments coulissants (19) juxtaposés, qui peuvent être commandés séparément en fonction de la fente de sciage (23) et être introduits dans la fente de sciage (23).

8. Installation de sciage selon l'une quelconque des revendications précédentes, **caractérisée en ce que** ledit au moins un élément coulissant (19) est mobile par voie mécanique et/ou pneumatique et/ou électrique et/ou hydraulique.

9. Installation de sciage selon l'une quelconque des revendications précédentes, **caractérisée en ce que** la scie est conçue sous forme de scie à portique et ledit au moins un élément coulissant (19) est agencé au niveau d'un portique (4).

10. Installation de sciage selon la revendication 9, **caractérisée en ce que** plusieurs éléments coulissants (19) juxtaposés sont agencés le long du portique (4).

11. Installation de sciage selon l'une quelconque des revendications 1 à 8, **caractérisée en ce que** la scie est conçue sous forme de scie à portique et comporte au moins une tête de scie (5), la ou chaque tête de scie (5) étant mobile le long d'un portique (4) et le portique (4) étant mobile dans une direction perpendiculaire à la direction de ladite tête de scie.

12. Installation de sciage selon l'une quelconque des revendications 9 à 11, **caractérisée en ce qu'**une ou la ou chaque tête de scie (5) et au moins un élément coulissant (19) ou les éléments coulissants sont agencés au niveau du portique (4).

13. Installation de sciage selon la revendication 12, **caractérisée en ce que** chaque tête de scie (5) est mobile indépendamment de l'élément coulissant (19) ou des éléments coulissants.

14. Installation de sciage selon l'une quelconque des revendications précédentes, **caractérisée en ce que** la scie comporte au moins une tête de scie (5) avec une lame de scie (17) circulaire.

15. Installation de sciage selon la revendication 14, **caractérisée en ce que** la lame de scie (17) est rotative autour d'un axe perpendiculaire au plan de la pièce à scier.

16. Installation de sciage selon l'une quelconque des revendications précédentes, **caractérisée en ce que** le porte-pièce (10, 30) formant un support pour la pièce à scier (18) peut être positionné sur une table rotative (9).

17. Installation de sciage selon la revendication 16, **caractérisée en ce que** la table rotative (9) est sensiblement circulaire et est entraînée en rotation autour de son axe central.

18. Installation de sciage selon l'une quelconque des revendications précédentes, **caractérisée en ce qu'**elle comporte un dispositif de commande et/ou de réglage destiné à commander et/ou régler le mouvement dudit au moins un élément coulissant (19) et/ou, te cas échéant, le mouvement du portique (4) et/ou, le cas échéant, le mouvement de ladite au moins une tête de scie (5) et/ou, le cas échéant, la rotation de la lame de scie (17) et/ou, le cas échéant, la rotation de la table rotative (9).

19. Installation de sciage selon la revendication 18, **caractérisée en ce qu'**un plan de coupe peut être entré dans le dispositif de commande et/ou de réglage et/ou sélectionné dans celui-ci.

20. Installation de sciage selon la revendication 19, **caractérisée en ce qu'**elle comporte un moyen destiné à optimiser le plan de coupe.

21. Installation de sciage selon l'une quelconque des revendications 18 à 20, **caractérisée en ce qu'**elle comporte au moins un moyen de transport, qui coopère avec le dispositif de commande et/ou de réglage et est conçu de préférence sous forme de transporteur à rouleaux (28) et qui est destiné à amener un porte-pièce (10, 30) avec une pièce à scier (18) posée sur celui-ci et/ou à évacuer les morceaux (25) sciés dans la pièce.

22. Système d'installation de sciage **caractérisé en ce qu'**il comporte une pluralité d'installations de sciage selon l'une quelconque des revendications 1 à 21, qui sont reliées les unes aux autres par au moins un moyen de transport, conçu de préférence sous forme de transporteur à rouleaux et destiné à amener des porte-pièce munis de pièces à scier ou à évacuer les morceaux sciés dans la pièce.
